Europäisches Patentamt

European Patent Office

Office européen des brevets

(11) Publication number: **0 045 615**
**B1**

(12) EUROPEAN PATENT SPECIFICATION

(45) Date of publication of patent specification: **15.05.85**

(21) Application number: **81303448.5**

(22) Date of filing: **27.07.81**

(51) Int. Cl.⁴: **F 04 D 25/04**, F 24 F 7/02 // B63J2/02, B60H1/24

(54) Vehicle or building ventilating system driven by moving air.

(30) Priority: **25.07.80 GB 8024429**

(43) Date of publication of application:
**10.02.82 Bulletin 82/06**

(45) Publication of the grant of the patent:
**15.05.85 Bulletin 85/20**

(84) Designated Contracting States:
**AT BE CH DE FR IT LI LU NL SE**

(56) References cited:
**DE-C- 175 820**
**DE-C- 521 795**
**GB-A- 295 019**
**GB-A-1 518 151**
**GB-A-1 523 406**

(73) Proprietor: **FLETTNER VENTILATOR LIMITED**
**2 Basing Hill**
**London NW11 8TH (GB)**

(72) Inventor: **Fleury, Noel Wilfred**
**22 Prospect Road**
**London, N.W.2. (GB)**
Inventor: **Stern, Derek Vincent**
**2 Basing Hill**
**London, NW11. 8TH (GB)**

(74) Representative: **Day, Jeremy John et al**
**REDDIE & GROSE 16 Theobalds Road**
**London, WC1X 8PL (GB)**

Courier Press, Leamington Spa, England.

## Description

This invention relates to an improved ventilating or air moving device, suitable for use, for example, on vehicles (including ships) or for ventilating buildings.

Patent Specification GB—A—295019, describes a ventilating device according to the precharacterizing portion of claim 1, having a driving rotor mounted between two parallel discs on top of a vehicle and coupled to drive a centrifugal fan, which draws air axially up through an aperture in the vehicle roof and drives it out through a circular gap between the bottom of the rotor and the roof. The rotor is driven by air flow as the vehicle moves, or by the wind, and is effective to operate the fan.

In an alternative arrangement the fan outlet is arranged to be within the vehicle so that air is circulated wholly within the vehicle. In this way air can be circulated to a refrigerating system in a refrigerated van, for example.

The prior devices have all been costly and have tended to be rather high, adding to the overall height of the vehicle. This is clearly disadvantageous.

Furthermore, since the rotor is mounted between two discs the upper disc must generally be supported by peripheral struts and thus the device when mounted on a vehicle tends to catch on overhanging trees and the like and is very liable to do damage both to itself and to the roof of the vehicle on which it is mounted.

Patent Specifications GB—A—1518151 and GB—A—1523406 each show wind driven devices having a rotor which at its upper end has a cover plate that extends only over the area defined between the rotor blades at that point, although there is no specific mention of this fact in the description.

This invention is based on the observation that if in the ventilating device according to GB—A—295019, instead of the rotor being mounted between two discs, only the area defined between the rotor blades is covered, a number of advantages are obtained. First, the rotor can be made from plastics material as a unit with the cover plate integral with the rotor blades which provides ease of manufacture and allows the production of a lightweight rotor that can be turned at very much lower air speeds and, secondly, the contours of the rotor can be such that the rotor, when mounted on a vehicle, is much less likely to catch on overhanging trees, etc. and, accordingly, is much less susceptible to damage in this way.

This invention provides a ventilating device comprising a centrifugal fan and a rotor capable of being rotated by moving air for driving the fan, the rotor comprising a base plate for outwardly deflecting air passing through the fan and an air scoop extending upwardly from the base plate comprising two arcuate rotor blades in spaced overlapping relation with their concave surfaces in opposition to define a sinusoidal passage between the rotor blades and a cover plate, wherein the rotor is made from plastics material and the cover plate extends only over the area defined between the rotor blades and is integral with the rotor blades.

The rotor and fan are carried on a mounting by which the ventilating device can be mounted on a vehicle or on a building. The mounting also preferably carries the bearing for the fan and the rotor, the bearing preferably forming a sealed unit.

In the ventilating device of the invention the rotor is manufactured, for example, from polypropylene, ABS or the like. The fan is also preferably made from plastics material. The mounting may be made in plastics or metal, for example, zinc alloy or aluminium.

The ventilating device of the invention may also comprise a closable shutter unit mounted below the centrifugal fan to control the amount of air passing through the fan.

The invention will now be described in greater detail by way of example with reference to the drawings, in which:—

Fig. 1 is a perspective view of an improved ventilator embodying the invention;

Fig. 2 is a plan view of the rotor;

Fig. 3 is a sectional elevational view through the ventilator when mounted on a roof with a shutter arranged below the ventilator input; and

Fig. 4 is an underplan view of the ventilator taken on the line IV—IV on Fig. 3.

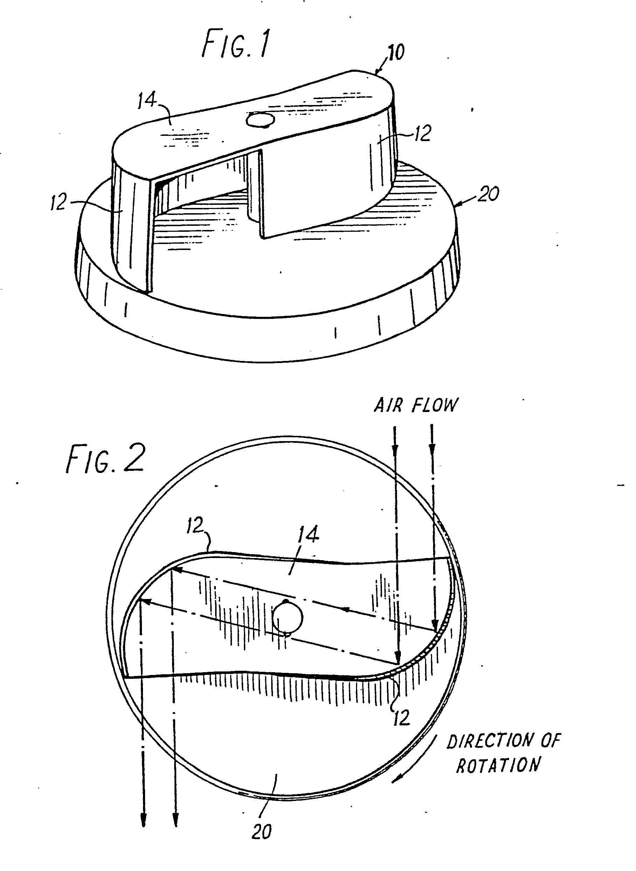

Referring to the drawings, the ventilator comprises an air scoop 10 of plastics material which is shaped to be driven in rotation by air flow as indicated by the chain-dotted lines in Fig. 2. We have found that in fact the rotor need not be mounted between two discs, as had hitherto been thought, but that good results are achieved with the construction illustrated in which only the area defined between the two rotor blades 12 is covered as at 14. This has constructional and operational advantages in that it is possible to mould the rotor in a single moulding, and that it is less likely to catch on obstructions, such as the branches of trees, due to its relatively smooth contour.

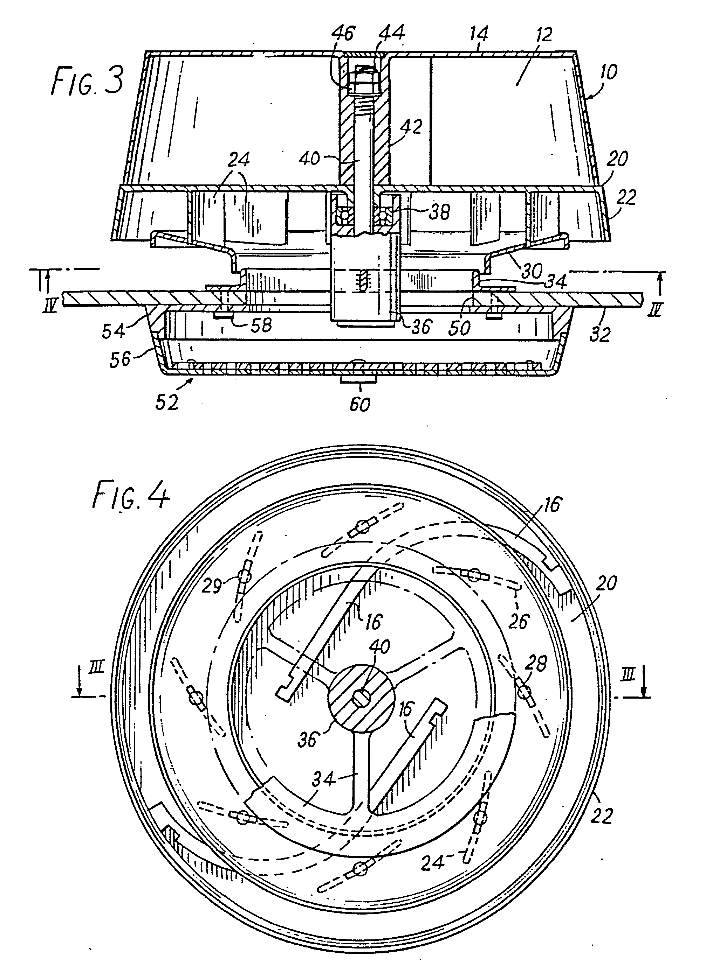

The bottom edges of the rotor fit into slots 16, seen in Fig. 4, which thus shows clearly the shape of the blades 12. Instead of slots, embossed recesses may be used. The slots or recesses 16 are formed in a base plate 20 which has a downturned rim 22 and carries on its lower surface centrifugal fan impeller blades 24, seen in Figs. 3 and 4. The lower edges 26 of the blades 24 are received in slots 28 in a lower cover plate or shield 30, the plates 20 and 30 thus defining between them the axial extent of the centrifugal fan air path. To ensure that the blades 24 are securely attached to the cover plate 30, pegs or pins 29 are used to stake the lower edges of the blades and are sealed over with the application of heat.

All the structure so far described is mounted for rotation on the vehicle roof 32 by means of a spoked mounting ring 34 having a central hollow boss 36. The cover plate 30 fits as closely as possible around the edge of the mounting ring 34. The boss 36 contains two sealed roller bearing units one of which is shown at 38 and which allows rotation of a central shaft 40 axially held in the bearings. The rotor 10 has a corresponding central boss 42 which receives this shaft 40 and is counterbored at 44 to receive two nuts 46 which are threaded onto the end of the shaft 40 to secure the air scoop 10 and base plate 20. A small cover disc 48 fits into the top of the recess 44.

In use the air is driven outwardly by the centrifugal fan blades 24 driven by rotor 10 and air is drawn upwardly through an aperture 50 in the vehicle roof 32 as a result. The rotor operation is surprisingly effective and in one example started to be operative at an air speed of about 5 mph (about 8 Km/h).

Beneath the vehicle roof 32 it is possible to provide a closable shutter unit 52. This is essentially in two parts, namely a circular mounting and roof support plate 54 and a shutter 56 which clips to the rim of the mounting plate by three sprung lugs spaced around the periphery. The mounting plate 54 has mounting holes which are aligned with holes in the mounting plate 34 so that bolts 58 can secure both the ventilator and shutter unit to the vehicle roof 32. This strengthens the roof around the aperture 50. A neoprene seal or gasket can be included in the assembly. The shutter 56 itself comprises two slotted grilles one of which is slidable over the other by means of a button 60. The shutter may be flat as shown or slightly curved (dished).

It is seen that the ventilator consists essentially of the airscoop 10, cover plate 14 and base plate 20, and lower shield plate 30, all of which can be formed from polypropylene mouldings. The mounting ring 34 can be a zinc alloy casting. The shutter unit can likewise be formed of plastics mouldings, using for instance a polypropylene co-polymer or ABS plastic.

It will be appreciated that the ventilator can be used in road or rail vehicles, on boats and ships, or on buildings or caravans, including stationary caravans. If increased power is required the height of the rotor should be increased. In a modified device, the mounting is between the rotor and the fan with the fan being inside the vehicle. In this form the device causes air circulation wholly within the vehicle.

## Claims

1. A ventilating device comprising a centrifugal fan (24) and a rotor capable of being rotated by moving air for driving the fan (24), the rotor comprises a base plate (20) for outwardly deflecting air passing through the fan (24) and an air scoop (10) extending upwardly from the base plate (20) comprising two arcuate rotor blades (12) in spaced overlapping relation with their concave surfaces in opposition to define a sinusoidal passage between the rotor blades (12) and a cover plate (14), characterised in that the rotor is made from plastics material and the cover plate (14) extends only over the area defined between the rotor blades (12) and is integral with the rotor blades (12).

2. A device according to claim 1, wherein the rotor and fan (24) are carried on a mounting (34) by which the ventilating device can be mounted on a vehicle or on a building, which mounting (34) also carries the bearing (38) for the fan (24) and the rotor.

3. A device according to claim 1 or claim 2, wherein the fan (24) is also made from plastics material.

4. A device according to any one of claims 1 to 3, including a closable shutter unit (52) mounted below the centrifugal fan (24) to control the amount of air passing through the fan (24).

## Patentansprüche

1. Lüftereinrichtung mit einem Zentrifugalgebläse (24) und einem Rotor, welcher durch sich bewegende Luft drehbar ist, um das Gebläse (24) anzutreiben, und welcher eine Grundplatte (20) zum Ablenken von durch das Gebläse (24) gehende Luft nach außen und eine sich von der Grundplatte (20) nach oben erstreckende Luftschaufel (10) enthält, welche zwei gebogene Rotorblätter (2) in beabstandeter, sich überlappender und mit ihren konkaven Flächen einander gegenüberliegender Anordnung enthält, um einen welligen Kanal zwischen den Rotorblättern und einer Deckplatte (14) zu begrenzen, dadurch gekennzeichnet, daß der Rotor aus Kunststoffmaterial hergestellt ist und daß sich die Deckplatte (14) nur über den Bereich zwischen den Rotorblättern (12) erstreckt und einstückig mit den Rotorblättern (12) ist.

2. Einrichtung nach Anspruch 1, dadurch gekennzeichnet, daß der Rotor und das Gebläse (24) auf einer Halterung (34) angeordnet sind, mit der die Lüftereinrichtung an einem Fahrzeug oder einem Gebäude angebracht werden kann, wobei die Halterung (34) auch das Lager (38) für das Gebläse (24) und den Rotor trägt.

3. Einrichtung nach Anspruch 1 oder 2, dadurch gekennzeichnet, daß das Gebläse (24) ebenfalls aus Kunststoffmaterial hergestellt ist.

4. Einrichtung nach einem der Ansprüche 1 bis 3 mit einer schließbaren Verschlußeinheit (52), die unter dem Zentrifugalgebläse (24) montiert ist, um die Menge der durch das Gebläse (24) gehenden Luft zu steuern.

## Revendications

1. Dispositif de ventilation comportant un ventilateur centrifuge (24) et un rotor apte à être entraîné en rotation par l'air en déplacement de manière à entraîner le ventilateur (24), le rotor comportant une plaque de base (20) servant à dévier vers l'extérieur l'air traversant le ventilateur (24) et un dispositif formant prise d'air (18) s'étendant vers le haut à partir de la plaque de base (20) et comprenant deux pales de rotor incurvées (12) disposées en recouvrement à distance l'une de l'autre avec leurs surfaces concaves disposées en vis-à-vis de manière à définir un passage sinusoïdal entre les pales (12) du rotor et une plaque formant capot (14), caractérisé en ce que le rotor est constitué en une matière plastique et que la plaque formant capot (14) s'étend uniquement au-dessus de la surface définie entre les pales (12) du rotor et est d'un seul tenant avec ces dernières.

2. Dispositif selon la revendication 1, dans lequel le rotor et le ventilateur (24) sont portés par un support (34) au moyen duquel le dispositif de ventilation peut être monté sur un véhicule ou sur un bâtiment, lequel support (34) porte également le palier (38) pour le ventilateur (24) et pour le rotor.

3. Dispositif selon la revendication 1 ou 2, dans lequel le ventilateur (24) est également constitué par une matière plastique.

4. Dispositif selon l'une quelconque des revendications 1 à 3, incluant une unité d'obturation (52) pouvant être fermée, montée au-dessous du ventilateur centrifuge (24) de manière à contrôler la quantité d'air traversant ce ventilateur (24).

FIG.1

FIG.2

AIR FLOW

DIRECTION OF ROTATION

1

FIG. 3

FIG. 4